# FASCICULE DE BREVET EUROPEEN

(11) **EP 3 380 365 B1**
(45) Date de publication et mention de la délivrance du brevet: **09.11.2022**
(21) Numéro de dépôt: 16815578.6
(22) Date de dépôt: 17.11.2016
(51) Int. Cl.: B60R 16/03, B60H 1/00, B60R 16/023

(54) **DISPOSITIF ELECTRONIQUE POUR VEHICULE AUTOMOBILE ALIMENTE PAR DEUX RESAUX D'ALIMENTATION ELECTRIQUES**
ELEKTRONISCHER VORRICHTUNG FÜR KRAFTFAHRZEUGE, WOBEI DIE VORRICHTUNG MIT ZWEI BORDNETZE VERBUNDEN IST
ELECTRONIC DEVICE FOR VEHICLES POWERED BY TWO ELECTRICAL POWER NETWORKS

(30) Priorité: 25.11.2015 FR 1561380
(43) Date de publication de la demande: 03.10.2018
(73) Titulaire: Valeo Systemes Thermiques, 78320 Le Mesnil Saint Denis (FR)
(72) Inventeur: FOURNIER, Jonathan, 78322 Le Mesnil Saint-Denis Cedex (FR)
(74) Mandataire: Valeo Systèmes Thermiques
(86) Numéro de dépôt international: PCT/FR2016/052983
(87) Numéro de publication internationale: WO 2017/089678

(56) Documents cités:
- EP-A2- 1 147 943
- WO-A1-2004/042888
- WO-A1-2015/052137
- DE-A1-102012 103 597
- FR-A1- 2 912 851
- FR-A1- 3 013 003
- US-A1- 2015 076 899

## Description

### DOMAINE TECHNIQUE DE L'INVENTION

La présente invention concerne un dispositif électronique pour véhicule automobile adapté pour être alimenté en tension par un premier réseau d'alimentation électrique et par un deuxième réseau d'alimentation électrique.

Elle trouve une application particulière, mais non limitative dans les dispositifs de chauffage électriques pour véhicule automobile.

### ARRIÈRE-PLAN TECHNOLOGIQUE DE L'INVENTION

Dans le domaine des dispositifs de chauffage électriques pour véhicule automobile, en particulier lorsque ces dispositifs de chauffages électriques sont des dispositifs additionnels, il est connu d'alimenter un dispositif de chauffage électrique par deux réseaux d'alimentation électriques différents, l'un étant un réseau d'alimentation électrique forte puissance utilisé pour fournir une forte tension à des éléments chauffants résistifs du dispositif de chauffage électrique et l'autre étant un réseau d'alimentation électrique faible puissance utilisé pour fournir une tension plus faible à des composants électroniques de pilotages du courant dans les résistances chauffantes. A cet effet, le dispositif de chauffage électrique comprend un bus système série sur lequel des consignes de chauffe peuvent lui être envoyées et une interface de connexion avec chaque réseau d'alimentation électrique, les deux interfaces de connexion étant reliées à une masse commune (via un câble de masse). Le bus système série est alimenté par le même réseau d'alimentation que les composants électroniques de pilotage.

Un inconvénient de cet état de la technique est que si le câble de masse est coupé, cela entraîne une perte de la masse pour le dispositif de chauffage électrique. Dans ce cas, la forte tension appliquée sur les éléments chauffants résistifs peut faire apparaître une différence de potentiel importante sur l'interface de connexion reliée au réseau d'alimentation électrique faible puissance, et sur le bus système série ce qui risque de les endommager.

Dans ce contexte, la présente invention vise à résoudre l'inconvénient précédemment mentionné.

### DESCRIPTION GENERALE DE L'INVENTION

A cette fin, l'invention propose un dispositif électronique pour véhicule automobile adapté pour être alimenté en tension par un premier réseau d'alimentation électrique et par un deuxième réseau d'alimentation électrique, selon lequel le dispositif électronique comprend :
- une première interface de connexion avec le premier réseau d'alimentation électrique ;
- une deuxième interface de connexion avec le deuxième réseau d'alimentation électrique, la première interface de connexion et la deuxième interface de connexion étant reliées à une masse commune ;
- une troisième interface de connexion avec un bus système série ;
- un interrupteur principal adapté pour faire transiter des signaux sur le bus système série ;
- une diode anti-retour principale adaptée pour empêcher un courant de circuler depuis le deuxième réseau d'alimentation électrique vers le premier réseau d'alimentation électrique ;
- un module fonctionnel relié à la première interface de connexion et à la deuxième interface de connexion ;
- un module de protection adapté pour isoler le premier réseau électrique et le bus système série du deuxième réseau d'alimentation électrique lors d'une perte de la masse commune.

Ainsi, comme on va le voir en détail ci-après, lors d'une perte de masse, le module de protection va désactiver l'interrupteur principal de sorte qu'il soit ouvert. Ceci aura pour conséquence de déconnecter le réseau d'alimentation électrique forte puissance du réseau d'alimentation électrique faible puissance et du bus système série. Ces derniers ne seront donc pas impactés par la forte tension délivrée par le réseau d'alimentation électrique forte puissance et seront par conséquent protégés.

Selon des modes de réalisation non limitatifs, le dispositif électronique peut comporter en outre une ou plusieurs caractéristiques supplémentaires parmi les suivantes :
Selon un mode de réalisation non limitatif, le module fonctionnel comprend en outre un module de pilotage adapté pour être alimenté en tension par le premier réseau d'alimentation électrique et pour recevoir et/ou émettre des signaux via le bus système série. Le module fonctionnel peut ainsi échanger des informations avec un autre dispositif électronique via son module de pilotage. Il peut envoyer ainsi des informations de diagnostic et recevoir des informations de consigne.

Selon un mode de réalisation non limitatif, le module de protection comprend un interrupteur secondaire adapté pour s'ouvrir lors de la perte de la masse commune de sorte à ouvrir l'interrupteur principal. L'ouverture de l'interrupteur principal évite d'avoir des courants qui circulent du deuxième réseau d'alimentation électrique vers le premier réseau d'alimentation électrique. Cela permet ainsi de protéger le bus système série contre une tension élevée fournie par le deuxième réseau d'alimentation électrique.

Selon un mode de réalisation non limitatif, le module de protection comprend en outre une résistance de rappel principale pour garantir l'ouverture de l'interrupteur principal lors de la perte de la masse commune.

Selon un mode de réalisation non limitatif, le module de protection comprend en outre une résistance de rappel secondaire pour garantir l'ouverture de l'interrupteur secondaire lors de la perte de la masse commune.

Selon un mode de réalisation non limitatif, le module de protection comprend en outre une diode anti-retour secondaire adaptée pour empêcher un courant de circuler vers le premier réseau électrique lors de la perte de la masse commune.

Selon un mode de réalisation non limitatif, la diode anti-retour secondaire est reliée à la masse commune.

Selon un mode de réalisation non limitatif, le module de protection comprend en outre une résistance de base pour garantir la fermeture de l'interrupteur secondaire lorsque du courant circule dans ledit interrupteur secondaire.

Selon un mode de réalisation non limitatif, la résistance de base et la diode anti-retour secondaire sont connectées en série.

Selon un mode de réalisation non limitatif, l'interrupteur principal est disposé entre le bus système série et le module de pilotage.

Selon un mode de réalisation non limitatif, le premier réseau d'alimentation électrique est adapté pour fournir une tension inférieure au deuxième réseau d'alimentation électrique.

Selon un mode de réalisation non limitatif, le premier réseau d'alimentation électrique est adapté pour fournir une tension de 12Volts.

Selon un mode de réalisation non limitatif, le deuxième réseau d'alimentation électrique est adapté pour fournir une tension de 48Volts.

Selon un mode de réalisation non limitatif, le bus système série est un bus LIN. Cela permet de n'utiliser qu'un seul fil pour l'envoi et la réception des signaux. Ainsi, on n'utilise qu'un seul fil pour deux fonctions différentes, à savoir une fonction de diagnostic et une fonction de consigne. On peut également utiliser tout autre type de bus de communication permettant d'avoir une communication bidirectionnelle.

Selon un mode de réalisation non limitatif, l'interrupteur principal est un transistor MOSFET. Cela permet à la tension de commande d'être indépendante du courant circulant sur le réseau de communication.

Selon un mode de réalisation non limitatif, la résistance de rappel principale est reliée à la grille et à la source du transistor MOSFET.

Selon un mode de réalisation non limitatif, l'interrupteur secondaire est un transistor bipolaire.

Selon un mode de réalisation non limitatif, la résistance de rappel secondaire est reliée à la base et à l'émetteur du transistor bipolaire.

Selon un mode de réalisation non limitatif, le collecteur de l'interrupteur secondaire est relié à la grille de l'interrupteur principal.

Selon un mode de réalisation non limitatif, l'interrupteur principal comprend une tension de claquage supérieure à 48Volts. Cela lui permet de supporter une tension de 48V qu'il peut recevoir lors de la perte de masse commune. Il n'est ainsi pas détruit.

Selon un mode de réalisation non limitatif, la tension de claquage est sensiblement égale à 100Volts. Les interrupteurs de puissance avec cette valeur de tension de claquage sont communs sur le marché et disponibles facilement.

Selon un mode de réalisation non limitatif, la diode anti-retour principale comprend une tension de claquage supérieure ou égale à 100Volts. Cela lui permet de supporter une tension de 48V qu'elle peut recevoir lors de la perte de masse commune.

Selon un mode de réalisation non limitatif, la première interface de connexion et la troisième interface de connexion font partie d'un même connecteur. Cela permet un gain de place, car on ne multiplie pas les connecteurs.

Selon un mode de réalisation non limitatif, le dispositif électronique comprend en outre une interface de masse et la deuxième interface de connexion et l'interface de masse font partie d'un même connecteur. Cela permet un gain de place, car on ne multiplie pas les connecteurs.

Selon un mode de réalisation non limitatif, ledit dispositif électronique est adapté pour fonctionner en mode esclave et le module de pilotage est adapté pour recevoir et émettre des signaux sur le bus système série de et vers un module maître.

Selon un mode de réalisation non limitatif, les signaux sont des signaux dominants à zéro Volts.

Selon un mode de réalisation non limitatif, le module de pilotage comprend un interrupteur en série avec une résistance de tirage.

Selon un mode de réalisation non limitatif, l'interrupteur principal comprend une diode de roue libre.

Selon un mode de réalisation non limitatif, le module fonctionnel comprend au moins un élément chauffant résistif relié à la première interface de connexion et au moins un élément de pilotage associé relié à la deuxième interface de connexion, ledit élément de pilotage étant adapté pour piloter un courant dans ledit élément chauffant résistif.

Il est également proposé un dispositif de chauffage électrique pour véhicule automobile comprenant un dispositif électronique selon l'une quelconque des caractéristiques précédentes.

Il est également proposé un pulseur d'air pour véhicule automobile comprenant un dispositif électronique selon l'une quelconque des caractéristiques précédentes.

### BREVE DESCRIPTION DES FIGURES

L'invention et ses différentes applications seront mieux comprises à la lecture de la description qui suit et à l'examen des figures qui l'accompagnent :
- la figure 1 représente un schéma selon un mode de réalisation non limitatif de l'invention d'un dispositif électronique pour un véhicule automobile, ledit dispositif électronique étant alimenté par deux réseaux d'alimentation électriques différents reliés à une masse commune, et relié à un bus système série et comprenant un module de protection ;
- la figure 2 représente un schéma du dispositif électronique de la figure 1 lorsque la masse commune est perdue ;
- la figure 3 représente un premier schéma du dispositif électronique de la figure 1 lorsqu'il reçoit des signaux d'un autre dispositif électronique, selon un mode de réalisation non limitatif ;
- la figure 4 représente un premier schéma du dispositif électronique de la figure 1 lorsqu'il envoie des signaux à un autre dispositif électronique, selon un mode de réalisation non limitatif ;
- la figure 5 représente un schéma du dispositif électronique des figures 1 à 3 avec le détail des composants électroniques du module de protection selon un mode de réalisation non limitatif.

### DESCRIPTION DE MODES DE REALISATION DE L'INVENTION

Les éléments identiques, par structure ou par fonction, apparaissant sur différentes figures conservent, sauf précision contraire, les mêmes références.

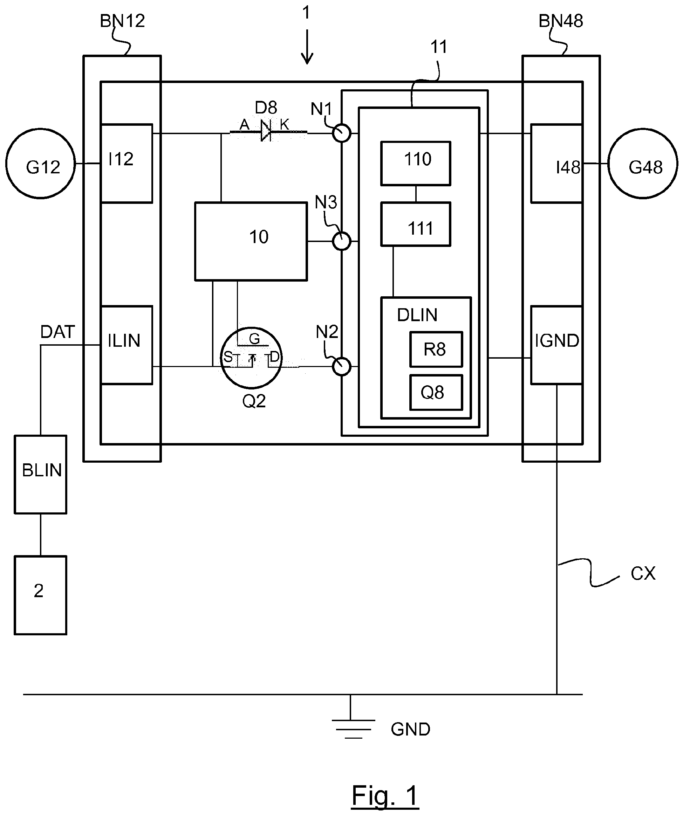

Le dispositif électronique 1 pour véhicule automobile V est illustré schématiquement sur la figure 1 selon un mode de réalisation non limitatif. Par véhicule automobile, on entend tout type de véhicule motorisé.

Le dispositif électronique 1 est décrit en référence aux figures 1 à 5.

Tel qu'illustré sur la figure 1, le dispositif électronique 1 comprend :
- une première interface de connexion I12 au premier réseau d'alimentation électrique G12 ;
- une deuxième interface de connexion I48 au deuxième réseau d'alimentation électrique G48 ;
- une troisième interface de connexion ILIN à un bus système série BLIN ;
- un interrupteur principal Q2 ;
- une diode anti-retour principale D8 ;
- un module fonctionnel 11 ;
- un module de protection 10 adapté pour isoler le premier réseau d'alimentation électrique G12 et le bus système série BLIN du deuxième réseau d'alimentation électrique G48 lors d'une perte de la masse commune GND.

Comme on va le voir en détail ci-après, lorsque la masse commune GND est perdue, l'ensemble des composants du module fonctionnel 11 montent jusqu'au potentiel de la tension fournie par le deuxième réseau d'alimentation électrique G48. Cela entraîne l'apparition de différences de potentiels et par conséquent de courants qui circulent entre ledit module fonctionnel 11 et :
- la première interface de connexion 112 ;
- le module de protection 10 ;
- le bus système série BLIN.

Ces courants risquent d'abimer en particulier la première interface de connexion I12 et le bus système série BLIN. La diode anti-retour principale D8 ainsi que le module de protection permettent de protéger ces éléments contre lesdits courants.

Dans la suite de la description, les termes réseau d'alimentation électrique et réseau seront utilisés indifféremment.

Les différents éléments du dispositif électrique 1 sont décrits plus en détail ci-après.

### • Interfaces de connexion

La première interface de connexion I12 est adaptée pour connecter le dispositif électronique 1 au premier réseau d'alimentation électrique G12. C'est une entrée qui permet de recevoir la tension U1 fournie par le premier réseau d'alimentation électrique G12.

La deuxième interface de connexion I48 est adaptée pour connecter le dispositif électronique 1 au deuxième réseau d'alimentation électrique G48. C'est une entrée qui permet de recevoir la tension U2 fournie par le deuxième réseau d'alimentation électrique G48.

Les premiers et deuxièmes réseaux d'alimentation électriques sont reliés à des batteries (non illustrées) du véhicule automobile qui sont les générateurs de tension.

Dans un mode de réalisation non limitatif, le premier réseau d'alimentation électrique G12 est adapté pour fournir une tension inférieure au deuxième réseau d'alimentation électrique G48.

Dans un mode de réalisation non limitatif, le premier réseau d'alimentation électrique G12 est adapté pour fournir une tension U1 de 12V (Volts). C'est un réseau faible puissance.

Dans un mode de réalisation non limitatif, le deuxième réseau d'alimentation électrique G48 est adapté pour fournir une tension U2 de 48V (Volts). C'est un réseau forte puissance. On notera qu'une batterie qui fournit de manière usuelle une tension de 48V permet de fournir une tension qui peut monter jusqu'à 58V.

La première interface de connexion I12 et la deuxième interface de connexion I48 sont reliées à une même masse GDN, appelée également masse commune GND.

Elles sont reliées par un câble de masse CX à ladite masse commune GND. Grâce à cette masse commune GND, on évite une surchauffe du dispositif électronique 1. Une telle surchauffe peut en effet survenir si deux masses différentes sont utilisées, les deux masses étant dimensionnées différemment. Dans ce cas, on a un câble de masse (appelé câble de masse de signal) relié à la première interface de connexion 112 et un câble de masse (appelé câble de masse de puissance) relié à la deuxième interface de connexion I48. Lorsqu'on déconnecte le câble de masse de puissance à chaud, dans ce cas, il y a en effet un risque que le câble de masse de signal ne brûle du fait que les deux masses sont dimensionnées différemment.

La troisième interface de connexion ILIN est adaptée pour connecter le dispositif électronique 1 avec un bus système série BLIN. C'est une entrée.

Les interfaces de connexion I12, I48, ILIN comprennent ainsi des connexions électriques adaptées pour effectuer les connexions respectivement avec le premier réseau d'alimentation électrique G12, le deuxième réseau d'alimentation électrique G48 et le bus système série BLIN.

Dans un mode de réalisation non limitatif, le bus système série BLIN est un bus de communication LIN (« Local Internetconnect Network »). Le dispositif électronique 1 fait ainsi partie d'un réseau de communication NLIN qui est un réseau LIN. On notera qu'un réseau de communication LIN permet de n'utiliser qu'un seul fil pour la communication des signaux.

Le bus système série BLIN permet de véhiculer des signaux DAT du dispositif électronique 1 vers un dispositif électronique externe 2 (décrit plus loin) et du dispositif électronique externe 2 vers le dispositif électronique 1.

Tel qu'illustré sur la figure 1 également, dans un mode de réalisation non limitatif, le dispositif électronique 1 comprend en outre une interface de masse IGND. L'interface de masse IGND est une sortie. On notera que dans un exemple non limitatif, le câble de masse CX relie l'interface de masse IGND au châssis du véhicule automobile V qui forme un plan de masse.

Dans un mode de réalisation non limitatif, le module de protection 10, le module fonctionnel 11, la diode anti-retour principale D8 et l'interrupteur principal Q2 font partie d'une même carte à circuit imprimé, appelée carte PCBA (en anglais « Printed Circuit Board Assembly »). Cette carte à circuit imprimé PCBA est ainsi reliée au plan de masse formé par le châssis du véhicule automobile V.

Tel qu'illustré sur la figure 1, dans un mode de réalisation non limitatif, la première interface de connexion I12 et la troisième interface de connexion ILIN font partie d'un même connecteur BN12. Cela permet de ne pas multiplier les connecteurs.

Tel qu'illustré sur la figure 1, dans un mode de réalisation non limitatif, la deuxième interface de connexion I48 et l'interface de masse IGND font partie d'un même connecteur BN48. Cela permet de ne pas multiplier les connecteurs.

Dans la suite de la description, les tensions de 12V pour la tension U1 et de 48V pour la tension U2 seront prises comme exemples non limitatifs.

### • Interrupteur principal

L'interrupteur principal Q2 est adapté pour faire transiter des signaux DAT sur le bus système série BLIN.

A cet effet, il est connecté au bus système série BLIN. En particulier, il est disposé entre le bus système série BLIN et le module de pilotage DLIN (décrit plus loin).

Dans un mode de réalisation non limitatif, l'interrupteur principal Q2 est un transistor MOSFET. Dans une variante de réalisation non limitative, c'est un transistor à canal N.

Dans ce cas, la grille G du transistor reçoit la première tension U1, à savoir la tension de 12V dans l'exemple non limitatif pris, la source S est connectée au bus système série BLIN, et le drain D est connecté au module de pilotage DLIN.

L'interrupteur principal Q2 est fermé lorsque sa tension Vgs est égale à la tension U1 fournie par le premier réseau G12, à savoir ici 12V. Lorsque les signaux DAT qui circulent sur le bus système série BLIN sont à 0V dans un mode de réalisation non limitatif, le drain D et la source S sont au potentiel 0V. La grille G étant alimentée par le premier réseau G12 de 12V, la tension Vgs est donc bien à 12V. Vgs étant supérieure à une tension seuil Vgsth, l'interrupteur principal Q2 se ferme bien. Dans un exemple non limitatif, Vgsth = 2V.

Dans un mode de réalisation non limitatif, l'interrupteur principal Q2 comprend une tension de claquage supérieure à 48Volts. Dans une variante de réalisation non limitative, la tension de claquage est sensiblement égale à 100Volts. L'interrupteur principal Q2 supporte ainsi la tension U2, ici 48V, qu'elle reçoit (notamment entre la source S et le drain D dans le mode de réalisation non limitatif des MOSFETS) lorsque la masse commune GND est perdue.

L'interrupteur principal Q2 est ouvert lorsque la tension Vgs est inférieure à la tension Vgsth, avec Vgsth la tension seuil qui assure le blocage de l'interrupteur principal Q2, soit lorsque Vgs est sensiblement égale à 0V. Comme on va le voir ci-après, l'interrupteur principal Q2 s'ouvre lorsque la masse commune GND est perdue.

### • Diode anti-retour principale

La diode anti-retour D8, dite diode anti-retour principale, est disposée entre le module fonctionnel 11 et la première interface de connexion I12, et en particulier entre un noeud électrique N1, appelé premier nœud, et la première interface de connexion I12.

Le premier noeud N1 permet de relier le module fonctionnel 11 à la première interface de connexion 112 via un fil de connexion électrique.

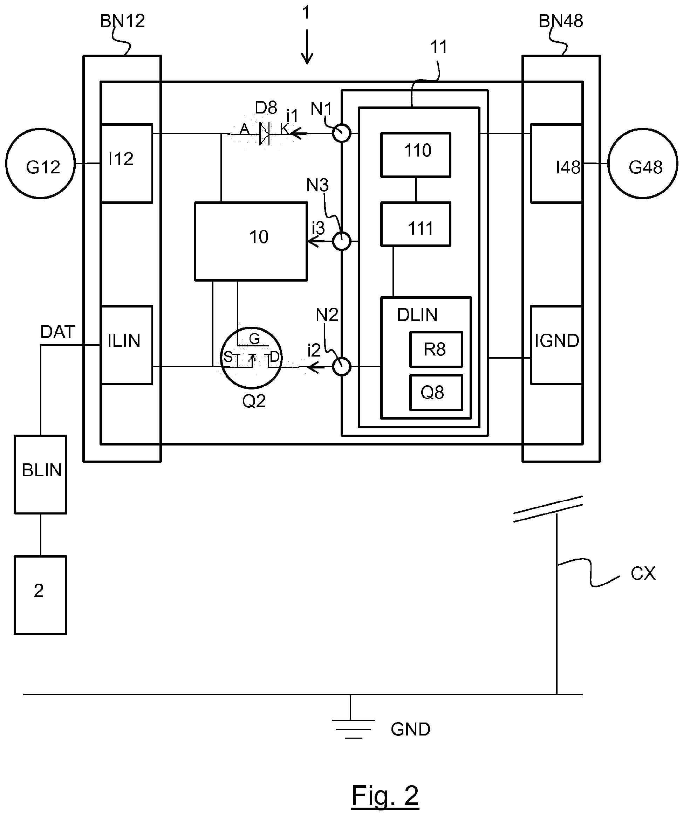

Lorsque la masse commune GND est perdue tel qu'illustré sur la figure 2, le câble de masse CX ayant été sectionné, le premier nœud N1 devient flottant, car il n'est plus relié à la masse commune GND.

Il monte donc jusqu'au potentiel 48V. Il existe ainsi une différence de potentiels entre le premier noeud N1 et la première interface de connexion I12 qui entraîne la création d'un courant i1 (illustré sur la figure 2) entre ledit premier noeud N1 et ladite première interface de connexion I12. En effet, dans ce cas, le premier noeud N1 se trouve au potentiel de 48V (tout le module fonctionnel 11 étant monté jusqu'au potentiel de 48V) tandis que la première interface de connexion I12 est au potentiel de 12V puisque reliée au premier réseau G12 de 12V.

La diode anti-retour principale D8 est adaptée pour empêcher un tel courant i1 de circuler depuis le deuxième réseau d'alimentation électrique G48 via le premier noeud N1 vers le premier réseau d'alimentation électrique G12 via la première interface de connexion I12.

La diode anti-retour principale D8 empêche le courant i1 de passer lorsqu'elle est dans un état bloqué.

A cet effet, la diode anti-retour D8 est dans un état bloqué quand la tension V_{AK} qui est égale à la différence de potentiels V_{A} à son anode A et V_{K} à sa cathode K est inférieure à une tension seuil Vs (donnée par le fabricant). Dans un exemple non limitatif, Vs= 0,6V. On a une telle différence lorsque la masse commune GND est perdue. En effet, dans ce cas, on a V_{A} = 12V et V_{K} = 48V (le premier nœud N1 étant au potentiel de 48V). On a donc V_{AK} négative.

La diode anti-retour principale D8 est passante lorsque V_{AK} > Vs. On obtient ceci lorsque la masse commune GND n'est pas perdue. En effet, dans ce cas, on a V_{A} = 12V et Vₖ = V_{A}-0,6V = 11,4V.

### • Module fonctionnel

Le module fonctionnel 11 est relié à la première interface de connexion 112 et à la deuxième interface de connexion I48 via respectivement le connecteur BN12 et via le connecteur BN48 vu précédemment. Il peut être ainsi alimenté par les deux tensions différentes U1 et U2 fournies respectivement par les deux réseaux d'alimentation électriques G12 et G48.

Le module fonctionnel 11 est également relié à la masse commune GND via le connecteur BN48.

Le module fonctionnel 11 comprend en outre un module de pilotage DLIN décrit plus loin (appelé en anglais « electronic driver »).

Un nœud électrique N2, dit deuxième nœud, relie le module de pilotage DLIN (décrit plus loin) et l'interrupteur principal Q2.

Par ailleurs, un nœud électrique N3, dit troisième nœud, relie le module fonctionnel 11 et le module de protection 10. Le troisième nœud N3 est relié à la masse commune GND du module fonctionnel 11 via ledit module fonctionnel 11.

Lorsque la masse commune GND est perdue, le module fonctionnel 11 monte jusqu'au potentiel de 48V. Les nœuds électriques N1, N2 et N3 deviennent flottants, car ils ne sont plus référencés à la masse commune. Ils montent alors jusqu'au potentiel de 48V.

Au niveau du premier noeud N1, une différence de potentiels de 48V-12V apparaît (entre le premier nœud N1 et la première interface de connexion I12) qui entraîne l'apparition du courant i1 (décrit précédemment) circulant du module fonctionnel 11 vers la première interface de connexion 112 qui risque d'endommager la première interface de connexion I12. La diode anti-retour principale D8 empêche un tel courant i1 de circuler (comme décrit précédemment).

Au niveau du deuxième noeud N2, selon que l'on se place du côté d'une électrode ou de l'autre électrode de l'interrupteur secondaire Q6 décrit plus loin, une différence de potentiels de 48V-0V (entre le deuxième noeud N2 et le bus système série BLIN) ou de 48V-12V (entre le deuxième noeud N2 et la première interface de connexion I12) apparaît qui entraîne l'apparition d'un courant i2 (illustré sur la figure 2) circulant du module de pilotage DLIN vers le bus système série BLIN qui risque de les endommager. Le module de protection 10 (en particulier la diode anti-retour secondaire D11) décrit plus loin et l'interrupteur principal Q2 empêchent un tel courant i2 de circuler.

Dans un premier mode de réalisation non limitatif, le dispositif électronique 1 est un dispositif de chauffage électrique pour véhicule automobile. Dans un exemple non limitatif, c'est un dispositif de chauffage électrique additionnel.

Dans ce cas, le module fonctionnel 11 comprend au moins un élément chauffant résistif 110 et au moins un élément de pilotage 111 associé pour piloter le courant dans ledit au moins un élément chauffant résistif.

Ledit élément chauffant résistif 110 est relié à la deuxième interface de connexion I48 et ledit élément de pilotage associé 111 est relié à la première interface de connexion I12. Ainsi dans l'exemple non limitatif pris, l'élément de pilotage 111 est alimenté par la tension U1 faible puissance de 12V et l'élément chauffant résistif 110 est alimenté par la tension U2 forte puissance de 48V.

Dans un exemple non limitatif, l'élément chauffant résistif 110 est une résistance chauffante.

Dans un autre exemple non limitatif, l'élément chauffant résistif 110 est une piste résistive.

Dans les deux exemples non limitatifs, la chaleur produite par l'élément chauffant résistif est transmise via un conduit de circulation d'un fluide (non illustré) audit fluide qui peut ainsi être chauffé

De tels dispositifs de chauffage électriques étant connus de l'homme du métier, ils ne sont pas décrits en détail ici.

Dans un deuxième mode de réalisation non limitatif, le dispositif électronique 1 est un pulseur d'air. Dans ce cas, le module fonctionnel 11 comprend un moteur 110 du pulseur d'air et un élément de pilotage 111 du moteur 110. Ainsi dans l'exemple non limitatif pris, l'élément de pilotage 111 est alimenté par une tension U2 forte puissance de 48V, le module de pilotage DLIN est alimenté par une tension faible puissance de 12V, et le moteur 110 est alimenté par une tension U2 forte puissance de 48V.

Dans un mode de réalisation non limitatif, un élément de pilotage 111 comprend un composant électronique tel qu'un interrupteur de puissance, qui est dans un exemple non limitatif, un MOSFET. Il permet de piloter le courant qui alimente un élément chauffant résistif 110. Le pilotage du courant dans des éléments chauffants résistifs étant connu de l'homme du métier, il n'est pas décrit ici. Classiquement, le dispositif électronique 1 comprend une pluralité d'éléments de pilotage.

Un élément de pilotage 111 coopère avec un module de pilotage DLIN du module fonctionnel 11 qui lui envoie des signaux DAT.

Le module de pilotage DLIN est décrit ci-après.

### ∘ Module de pilotage

Tel qu'illustré sur les figures 1 à 4 sur lesquelles est illustré schématiquement le module de pilotage DLIN, le module de pilotage DLIN comprend un interrupteur Q8 en série avec une résistance de tirage R8. Il est connecté à l'interrupteur principal Q2 du dispositif électronique 1.

Le module de pilotage DLIN est décrit ci-après dans son mode de fonctionnement lorsque la masse commune GND n'est pas perdue.

Le module de pilotage DLIN est adapté pour être alimenté en tension par le premier réseau d'alimentation électrique G12. Il est ainsi relié au premier réseau d'alimentation électrique G12 et à la masse commune GND via le module fonctionnel 11. Il est relié au premier réseau G12 via sa résistance de tirage R8 et à la masse commune GND via son interrupteur Q8.

Le module de pilotage DLIN est adapté pour recevoir et/ou émettre des signaux DAT via le bus système série BLIN. Il transmet les signaux reçus DAT à l'élément de pilotage 111 du module fonctionnel 11, ledit élément de pilotage 111 interprétant ces signaux DAT de sorte à piloter les éléments chauffants résistifs 110 dans le cas de l'application dispositif de chauffage électrique, ou le moteur 110 dans le cas de l'application pulseur d'air.

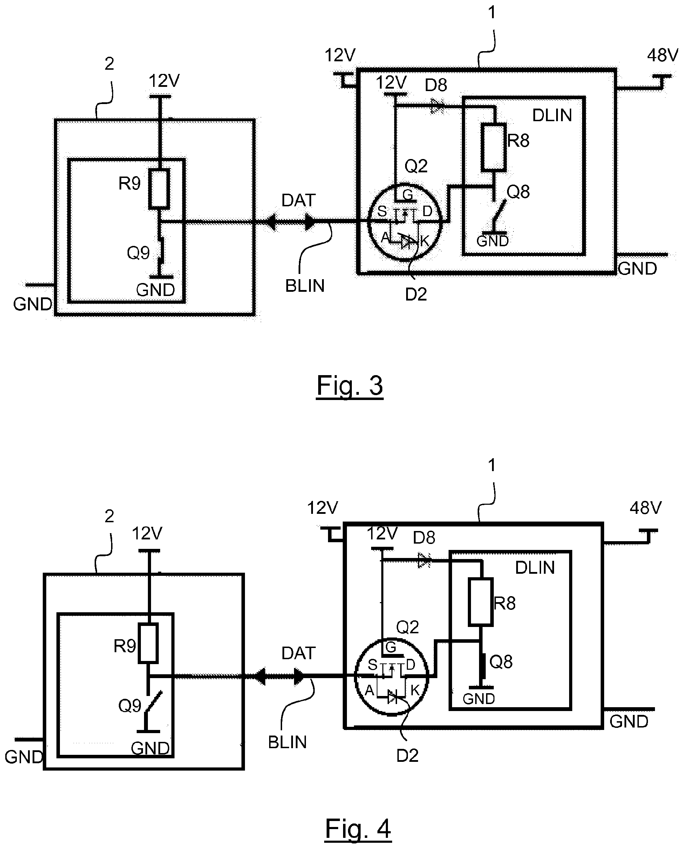

Dans un mode de réalisation non limitatif, ledit dispositif électronique 1 est adapté pour fonctionner en mode esclave, il forme un module esclave. Tel qu'illustré sur les figures 3 et 4, le module de pilotage DLIN est adapté pour recevoir et émettre des signaux DAT sur le bus système série BLIN de et vers un dispositif électronique 2 appelé module maître.

Dans un mode de réalisation non limitatif, les signaux DAT sont des signaux dominants. Dans un exemple non limitatif, les signaux dominants DAT sont des signaux à 0V.

Lorsque l'interrupteur Q8 est ouvert (figure 3), la résistance de tirage R8 amène le drain D de l'interrupteur principal Q2 du module esclave 1 à 12V. Lorsque l'interrupteur Q8 est fermé (figure 4), l'interrupteur amène le drain D de l'interrupteur principal Q2 du module esclave 1 à la masse commune GND.

Le dispositif électronique 2 fonctionne en mode maître et comprend un interrupteur Q9 et une résistance de tirage R9. Le module maître 2 est relié au deuxième réseau d'alimentation électrique G12 via sa résistance de tirage R9 et à la masse commune GND via sont interrupteur Q9.

Lorsque l'interrupteur Q9 est ouvert (figure 4), la résistance de tirage R9 amène le bus système série BLIN à 12V ce qui entraîne que la source S de l'interrupteur principal Q2 du module esclave 1 est à 12V. Lorsque l'interrupteur Q9 est fermé (figure 3), l'interrupteur amène le bus système série BLIN à la masse ce qui entraîne que la source S de l'interrupteur Q2 du module esclave 1 est à 0V.

On notera que par défaut les interrupteurs Q8 et Q9 sont ouverts. Le protocole LIN et le fonctionnement maître-esclave évite qu'ils ne se ferment en même temps.

Un module esclave 1 et le module maître 2 forme un réseau de communication NLIN. Dans un mode de réalisation non limitatif, le réseau de communication NLIN peut comporter une pluralité de modules esclaves 1.

Dans un mode de réalisation non limitatif, les interrupteurs Q8 et Q9 sont des interrupteurs NPN.

Dans un mode de réalisation non limitatif, le module maître 2 est le contrôle moteur ECU du véhicule automobile ou encore un dispositif électronique relié à la planche de bord du véhicule automobile.

Dans le cas où le dispositif électronique 1 est un dispositif de chauffage électrique, les signaux DAT sont dans un exemple non limitatif :
- des consignes de puissance chauffe envoyées du module maître 2 au dispositif de chauffage électrique 1 ; et
- des informations de diagnostic envoyées au du module maître 2 par le dispositif électronique 1. Dans des exemples non limitatifs, ces informations indiquent des courts-circuits, des surtensions, des sous-tensions, des sur-températures, des équipements défaillants, la consommation électrique du dispositif électronique 1 etc.

Dans le cas où le dispositif électronique 1 est un pulseur d'air, les signaux DAT sont dans un exemple non limitatif :
- des consignes de puissance de vitesse pour le moteur du pulseur d'air envoyées du module maître 2 au dispositif de chauffage électrique 1 ;
- des informations de diagnostic envoyées au du module maître 2 par le dispositif électronique 1, comme décrites ci-dessus.

Tel qu'illustré sur les figures 3 et 4, le module maître 2 est alimenté par le réseau faible puissance G12, à savoir par une tension U1 de 12V dans l'exemple non limitatif pris.

La figure 3 illustre l'envoi de signaux DAT du module maître 2 vers le dispositif électronique 1 et la figure 4 illustre l'envoi de signaux DAT du dispositif électronique 1 vers le module maître 2.

Lorsque le module maître 2 communique avec le module esclave 1, il lui envoie des signaux DAT. A cet effet, l'interrupteur Q9 commute de sorte que des signaux 0V (correspondant à un signal logique 0) ou 12V (correspondant à un signal logique 1) sont envoyés sur le bus système série BLIN vers le module esclave 1. Quand l'interrupteur Q9 se ferme, un signal logique 0 est envoyé, quand l'interrupteur Q9 s'ouvre, un signal logique 1 est envoyé. L'interrupteur Q8 lui reste toujours ouvert.

Lorsque le module esclave 1 répond au module maître 2, l'interrupteur Q8 commute de sorte que des signaux 0V (correspondant à un signal logique 0) ou 12V (correspondant à un signal logique 1) sont envoyés sur le bus système série BLIN vers le module maître 2. Quand l'interrupteur Q8 se ferme, un signal logique 0 est envoyé, quand l'interrupteur Q9 s'ouvre, un signal logique 1 est envoyé. L'interrupteur Q9 lui reste toujours ouvert.

Ainsi, tel qu'illustré sur la figure 3, quand le module maitre 2 envoie des signaux DAT au dispositif électronique 1, il impose un zéro sur le bus système série BLIN (dans le cas où les signaux DAT sont dominants), ce dernier étant alors au potentiel de masse GND. A cet effet, il ferme son interrupteur Q9. Sur la source S, il y a donc 0V et sur la grille 12V (puisque l'interrupteur principal Q2 reçoit sur sa grille G 12V de l'interface de connexion I12). La tension Vgs de l'interrupteur principal Q2 est donc égale à 12V (et donc supérieure à une tension seuil Vgsth) ce qui entraîne que ledit interrupteur principal Q2 est fermé. Les signaux dominants DAT arrivent donc bien à l'entrée du module de pilotage DLIN.

Tel qu'illustré sur la figure 4, quand le module esclave, ici le dispositif électronique 1, envoie des signaux DAT au module maître 2, il impose un zéro (dans le cas où les signaux DAT sont dominants) sur le drain D de l'interrupteur principal Q2. A cet effet, le module esclave 1 ferme son interrupteur Q8. L'interrupteur Q8 est fermé, le drain D est au potentiel de masse GND, soit à 0V.

On notera que tel qu'illustré sur les figures 3 et 4, l'interrupteur principal Q2 comprend une diode de roue libre D2 (appelée en anglais « body diode »). Celle-ci est disposée entre le drain D et la source S de l'interrupteur principal Q2.

Lorsque le drain D est à 0V, la diode de roue libre D2 devient passante.

On rappelle qu'une diode de roue libre est passante lorsque la tension V_{AK} égale à la différence de potentiel entre V_{A} son anode A et Vₖ sa cathode K est supérieure à une tension seuil Vs (donnée par le fabricant). Dans un exemple non limitatif, Vs= 0,6V.

Ainsi, lorsque le drain D est à 0V, la tension Vₖ est à 0V. Par ailleurs, V_{A} est à 12V puisqu'avant que l'interrupteur Q8 ne se ferme, la source de l'interrupteur principal Q2 était à 12V (grâce à la résistance de tirage R9 vue précédemment). Ainsi, on a V_{AK} qui est égale à 12V, soit supérieure à 0,6V. La diode de roue libre D2 lorsqu'elle est passante impose 0.6V sur la source S de l'interrupteur principal Q2, et fait monter la tension Vgs de 0V (lorsque Q2 est ouvert, Vgs=0V) à 11,4V (12V-0.6V). Cette valeur de tension Vgs est suffisante pour que l'interrupteur principal Q2 se ferme. Lorsqu'il se ferme, il relie sa tension drain D à sa source S de sorte que Vds est sensiblement égal à 0V (à une résistance parasite Rdson près) et la tension Vgs est sensiblement égale à 12V. Ainsi les signaux DAT à 0V arrivent bien à l'entrée du module maître 2.

La diode de roue libre D2 permet ainsi de fermer correctement l'interrupteur principal Q2. Dans le cas contraire, la source S resterait au potentiel de 12V et la grille étant à 12V, on aurait Vgs < Vgsth et ledit interrupteur principal Q2 demeurerait ouvert.

On notera que dans un exemple non limitatif, Vgsth=2V.

On notera que lorsque l'interrupteur principal Q2 est ouvert (état bloqué) (par exemple lors de la perte de masse commune GND comme décrit ci-après), il n'est pas piloté et on a Vgs < Vgsth soit Vgs=0V dans un exemple non limitatif et V_{AK} ≠ 0V (V_{KAK} peut monter jusqu'à 48V) et la diode de roue libre D2 revient dans un état bloqué. On notera que la diode de roue libre D2 n'est pas détruite par cette forte tension puisque la tension de claquage de l'interrupteur principal Q2 est supérieure à 48V.

Si la masse commune GND est correctement connectée et les interrupteurs Q8 et Q9 sont ouverts (par défaut), la grille G et la source S de l'interrupteur principal Q2 sont à 12V, on a V_{gs}=0V. L'interrupteur principal Q2 est alors ouvert.

Dans le cas où la masse commune GND est perdue, le module de pilotage DLIN n'est plus référencé à la masse. Il monte jusqu'au potentiel de 48V (tout le module fonctionnel 11 étant monté jusqu'au potentiel de 48V). Sans le module de protection 10 (décrit ci-dessous), le module de pilotage DLIN verrait à ses bornes une différence de potentiel de 48V-0V qui correspond à la différence entre le potentiel de 48V (appliquée sur le module fonctionnel 11) et le potentiel de 0V des signaux DAT envoyés par le réseau de communication NLIN. Cette différence de potentiel entraîne l'apparition d'un courant i3 (illustré sur la figure 2) qui circule dans ledit module de pilotage DLIN qui risquerait de l'endommager. En effet, le module de pilotage DLIN ne supporte pas une différence de potentiel aussi importante. Dans un exemple non limitatif, il supporte une différence de potentiel inférieure ou égale à 24V.

Comme on va le voir ci-après, grâce au module de protection 10 qui empêche le courant i3 de circuler lorsque la masse commune GND est perdue, il n'y aura plus de différence de potentiel aux bornes du module de pilotage DLIN et donc plus de courant circulant. Le module de pilotage DLIN sera uniquement au potentiel de 48V. Il ne sera ainsi pas endommagé.

### • Module de protection

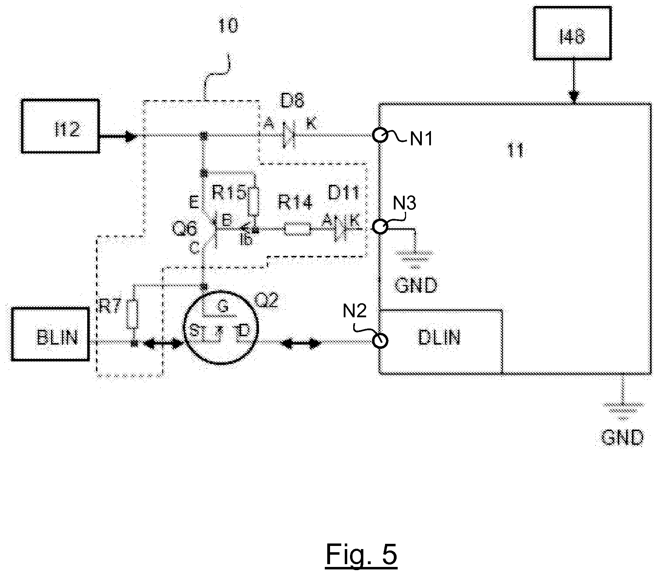

Le module de protection est décrit en référence à la figure 5.

Le module de protection 10 est adapté pour isoler le premier réseau électrique G12 et le réseau de communication NLIN du deuxième réseau d'alimentation électrique G48 lors d'une perte de la masse commune GND. La masse commune GND est perdue lorsque le câble de connexion CX de masse qui relie les première et deuxième interfaces de connexion 112 et I48 à la masse commune GND est sectionné.

Le module fonctionnel 11 comporte le troisième noeud N3 qui le relie au module de protection 10.

Les différents éléments du module de protection 10 sont décrits en détail ci-après.

### ∘ Interrupteur secondaire

Le module de protection 10 comprend un interrupteur secondaire Q6 adapté pour s'ouvrir lors de la perte de la masse commune GND de sorte à ouvrir l'interrupteur principal Q2.

Dans un mode de réalisation non limitatif, l'interrupteur secondaire Q6 est un transistor bipolaire. Dans une variante de réalisation non limitative, le transistor bipolaire Q6 est de type PNP.

Sa base B est au potentiel de masse, son émetteur E est connecté à la diode anti-retour D8, et son collecteur C est connecté à la grille du transistor de puissance principal Q2.

Comme on peut le voir sur la figure 5, quand la masse GND est perdue, la base B de l'interrupteur secondaire Q6 est en circuit ouvert. On a alors le courant de base Ib (courant qui circule dans la base B de l'interrupteur secondaire Q6) égal à 0, ce qui entraîne que ce dernier s'ouvre. On dit qu'il est dans un état bloqué.

Quand la masse commune GND est perdue, le deuxième noeud N2 monte au potentiel 48V et une différence de potentiel, ici de 48V-0V apparaît ainsi sur le deuxième noeud N2, ce qui génère le courant i2 qui circule sur le bus système série BLIN via l'interrupteur principal Q2 si ce dernier est fermé et si des signaux DAT circulent sur le bus série système BLIN, lesdits signaux étant à 0V dans un exemple non limitatif. Le module de pilotage DLIN et le bus système série BLIN ne supportent pas un tel courant i2 et risquent donc d'être endommagés.

L'interrupteur secondaire Q6 permet d'ouvrir l'interrupteur principal Q2 et ainsi empêche un tel courant i2 de circuler dans le bus système série BLIN. Ce dernier est ainsi protégé. En effet, quand l'interrupteur secondaire Q6 s'ouvre, l'interrupteur principal Q2, en particulier sa grille G dans l'exemple non limitatif du MOSFET, n'est plus alimentée par la tension U1, à savoir 12V, et donc le potentiel de la grille G (dans l'exemple non limitatif du MOSFET) est égale au potentiel de la source S grâce à la résistance R7 de rappel principale. on a donc, Vgs=0V. Q2 s'ouvre donc.

On notera que la source S est soit au potentiel de 12V soit au potentiel de 0V en fonction de la commutation des interrupteurs Q8, Q9.

Ainsi, bien que le module de pilotage DLIN soit monté jusqu'au potentiel de 48V, du fait de l'ouverture de Q2, il n'existe plus de différence de potentiel au niveau du module de pilotage DLIN, et donc de courant i2 qui circule sur le bus système série BLIN. Le module de pilotage DLIN est protégé. En ouvrant l'interrupteur principal Q2 lors de la perte de masse commune GND, on a ainsi déconnecté le deuxième réseau G48 du bus système série BLIN.

### ∘ Résistance de rappel principale

Afin de garantir l'ouverture de l'interrupteur principal Q2, le module de protection 10 comprend en outre une résistance de rappel principale R7.

On rappelle qu'une résistance de rappel est nécessaire, pour initialiser l'état de la grille G d'un interrupteur de puissance.

Par défaut, le niveau de commande appliqué (à savoir la valeur de la tension appliquée) à la grille G de l'interrupteur principal Q2 est indéterminé (la grille ne voit ni la tension 12V ni 0V). Il est dans un état flottant, et pourrait forcer celui-ci à entrer en conduction, soit totalement (avec risque de fonctionnement erratique du dispositif électronique 1), soit partiellement (avec risque de destruction de l'interrupteur principal Q2).

Ainsi, grâce à la résistance de rappel R7, on initialise la tension Vgs à 0V (elle est donc par défaut à 0V) ce qui garantit l'ouverture de l'interrupteur principal Q2.

La résistance de rappel principale R7 est reliée à la grille G et à la source S du transistor MOSFET Q2.

### ∘ Résistance de rappel secondaire

De la même manière que pour l'interrupteur principal Q2, afin de garantir l'ouverture de l'interrupteur secondaire Q6, le module de protection 10 comprend en outre une résistance de rappel secondaire R15.

Cette résistance de rappel secondaire R15 permet d'initialiser la tension Vbe de l'interrupteur secondaire Q6 à 0V (elle est donc par défaut à 0V) ce qui garantit l'ouverture de l'interrupteur secondaire Q6 lorsqu'il n'existe pas de courant Ib circulant dans la base B dudit interrupteur secondaire Q6.

La résistance de rappel secondaire R15 est reliée à la base B et à l'émetteur E du transistor bipolaire Q6.

### ∘ Diode anti-retour secondaire

Dans un mode de réalisation non limitatif, le module de protection 10 comprend en outre une diode anti-retour D11, dite diode anti-retour secondaire.

La diode anti-retour D11 est reliée à la masse commune GND via le module fonctionnel 11.

La diode anti-retour secondaire D11 est disposée entre le module fonctionnel 11 et l'interrupteur secondaire Q6. Le troisième nœud N3 relie ainsi en particulier le module fonctionnel 11 et la diode anti-retour secondaire D11.

Lorsque la masse commune GND est perdue, du point de vue de l'émetteur E de l'interrupteur secondaire Q6, il existe une différence de potentiels de 48V-12V entre ce troisième noeud N3 et la première interface de connexion 112 (tout le module fonctionnel 11 étant monté jusqu'au potentiel de 48V) qui entraîne la création d'un courant i3 entre ledit troisième noeud N3 et ladite première interface de connexion I12. En effet, dans ce cas, le troisième noeud N3 monte jusqu'au potentiel de 48V tandis que la première interface de connexion 112 est à 12V.

Du point de vue du collecteur C de l'interrupteur secondaire Q6, il existe une différence de potentiel de 48V-0V entre ce troisième noeud N3 et le bus système série BLIN (tout le module fonctionnel 11 étant monté jusqu'au potentiel de 48V) qui entraîne la création d'un courant i3 entre ledit troisième noeud N3 et ledit bus système série BLIN. En effet, dans ce cas, le troisième noeud N3 monte jusqu'au potentiel de 48V tandis que le bus système série BLIN est au potentiel de 0V du fait des signaux DAT à 0V.

La diode anti-retour secondaire D11 est adaptée pour empêcher un tel courant i3 de circuler dans le module de protection 10 et en particulier dans l'interrupteur secondaire Q6. Elle protège ainsi ledit interrupteur secondaire Q6.

La diode anti-retour D11 empêche le courant i3 de passer lorsqu'elle est dans un état bloqué.

A cet effet, la diode anti-retour D11 est dans un état bloqué quand la tension V_{AK} égale à la différence de potentiel V_{A} à son anode A et V_{K} à sa cathode K est inférieure à une tension seuil Vs (donnée par le fabricant). Dans un exemple non limitatif, Vs= 0,6V. On a une telle différence lorsque la masse commune GND est perdue. En effet, dans ce cas, on a V_{A} = 12V et V_{K} = 48V (le troisième nœud N3 étant monté jusqu'au potentiel de 48V). On a donc V_{AK} négative.

La diode D11 est passante lorsque V_{AK} > Vs. On obtient ceci lorsque la masse commune GND n'est pas perdue. En effet, dans ce cas, on a V_{A} au potentiel 12V et Vₖ au potentiel de masse.

Ainsi, lorsque l'interrupteur secondaire Q6 s'ouvre, il entraîne l'ouverture de Q2 et le blocage de la diode anti-retour D11 de sorte que le premier réseau d'alimentation électrique G12 et le bus système série BLIN sont déconnectés du deuxième réseau d'alimentation électrique G48. Ils ne seront plus perturbés par une différence de potentiel.

Ainsi, si le dispositif électronique 1 décrit ci-dessus qui est un module esclave perd la masse GND, il se déconnecte du réseau de communication NLIN, mais le module maître 2 et les autres modules esclaves 1 continuent de fonctionner sans être perturbés par le module esclave défaillant (celui qui a perdu la masse). Le réseau de communication NLIN est ainsi protégé d'une perte de masse d'un de ses modules esclaves 1.

On notera que le réseau de communication NLIN comporte un module maître 2 et peut comporter une pluralité de modules esclaves 1 dont au moins un module esclave est alimenté par le premier réseau d'alimentation électrique G12 et le deuxième réseau d'alimentation électrique G48. Les autres modules esclaves 1 peuvent être alimentés de la même manière ou uniquement par le premier réseau d'alimentation G12.

On notera que le bus système série BLIN permet d'acheminer des signaux DAT du module maître 2 vers l'ensemble des modules esclaves 1. Ainsi, en protégeant le bus système série BLIN, on protège également les autres modules esclaves 1 qui n'ont pas été déconnectés de la masse commune GND.

Ainsi, le module de protection 10 empêche lors d'une parte de la masse commune par le dispositif électronique 1 :
- la destruction des autres modules esclaves 1 ; ou
- la perturbation de la communication entre les autres modules esclaves et le module maître 2.

### ∘ Résistance de base

Afin de dimensionner le courant de base ib qui circule dans l'interrupteur secondaire Q6, dans un mode de réalisation non limitatif, le module de protection 10 comprend en outre une résistance de base R14. Le dimensionnement du courant de base Ib permet de garantir la fermeture de l'interrupteur secondaire Q6. De plus cela évite d'avoir un courant ib trop important ce qui risquerait de casser le composant Q6.

On rappelle que la valeur seuil de Ib pour que l'interrupteur secondaire Q6 se ferme est Ib > Ic/β, avec Ic le courant de collecteur et β l'amplification en courant de l'interrupteur donnée par le constructeur de l'interrupteur.

On notera que la résistance de base R14 et la diode anti-retour D11 sont connectées en série.

Bien entendu la description de l'invention n'est pas limitée aux modes de réalisation décrits ci-dessus.

Ainsi, dans un autre mode de réalisation non limitatif, l'interrupteur secondaire Q6 peut être un transistor MOSFET ou un transistor IGBT. Dans ces cas ; la résistance de base R14 n'est pas nécessaire.

Ainsi, l'invention décrite présente notamment les avantages suivants :
- c'est une solution simple à mettre en œuvre et peu coûteuse ;
- elle permet, grâce au module de protection 10, à la diode anti-retour D8, et à l'interrupteur principal Q2, lors d'une perte de masse commune GND, d'isoler le module de pilotage DLIN, le bus système série BLIN et la première interface de connexion I12 de la deuxième interface de connexion I48, et donc du deuxième réseau d'alimentation électrique G48. Ils ne sont ainsi pas endommagés.

## Revendications

1. Dispositif électronique (1) pour véhicule automobile (V) adapté pour être alimenté en tension par un premier réseau d'alimentation électrique (G12) et par un deuxième réseau d'alimentation électrique (G48), selon lequel le dispositif électronique (1) comprend :
- une première interface de connexion (I12) avec le premier réseau d'alimentation électrique (G12) ;
- une deuxième interface de connexion (I48) avec le deuxième réseau d'alimentation électrique (G48), la première interface de connexion (I12) et la deuxième interface de connexion (I48) étant reliées à une masse commune (GND) ;
- une troisième interface de connexion (ILIN) avec un bus système série (BLIN) ;
- un interrupteur principal (Q2) adapté pour faire transiter des signaux (DAT) sur le bus système série (BLIN) ;
- une diode anti-retour principale (D8) adaptée pour empêcher un courant (i1) de circuler depuis le deuxième réseau d'alimentation électrique (G48) vers le premier réseau d'alimentation électrique (G12) ;
- un module fonctionnel (11) relié à la première interface de connexion (I12) et à la deuxième interface de connexion (I48) ;
- un module de protection (10) adapté pour isoler le premier réseau électrique (G12) et le bus système série (BLIN) du deuxième réseau d'alimentation électrique (G48) lors d'une perte de la masse commune (GND).

2. Dispositif électronique (1) selon la revendication 1, selon lequel le module fonctionnel (11) comprend en outre un module de pilotage (DLIN) adapté pour être alimenté en tension par le premier réseau d'alimentation électrique (G12) et pour recevoir et/ou émettre des signaux (DAT) via le bus système série (BLIN).

3. Dispositif électronique (1) selon la revendication 1 ou selon la revendication 2, selon lequel le module de protection (10) comprend un interrupteur secondaire (Q6) adapté pour s'ouvrir lors de la perte de la masse commune (GND) de sorte à ouvrir l'interrupteur principal (Q2).

4. Dispositif électronique (1) selon l'une quelconque des revendications précédentes 1 à 3, selon lequel le module de protection (10) comprend en outre une résistance de rappel principale (R7) pour garantir l'ouverture de l'interrupteur principal (Q2) lors de la perte de la masse commune (GND).

5. Dispositif électronique (1) selon l'une quelconque des revendications précédentes 1 à 4, selon lequel le module de protection (10) comprend en outre une résistance de rappel secondaire (R15) pour garantir l'ouverture de l'interrupteur secondaire (Q6) lors de la perte de la masse commune (GND).

6. Dispositif électronique (1) selon l'une quelconque des revendications précédentes 1 à 5, selon lequel le module de protection (10) comprend en outre une diode anti-retour secondaire (D11) adaptée pour empêcher un courant (i3) de circuler vers le premier réseau électrique (G12) lorsque l'interrupteur secondaire (Q6) est dans un état ouvert.

7. Dispositif électronique (1) selon l'une quelconque des revendications précédentes 1 à 6, selon lequel le module de protection (10) comprend en outre une résistance de base (R14) pour garantir la fermeture de l'interrupteur secondaire (Q6) lorsque du courant (i) circule dans ledit interrupteur secondaire (Q6).

8. Dispositif électronique (1) selon la revendication 2 et l'une quelconque des revendications précédentes 3 à 7, selon lequel l'interrupteur principal (Q2) est disposé entre le bus système série (BLIN) et le module de pilotage (DLIN).

9. Dispositif électronique (1) selon l'une quelconque des revendications précédentes 1 à 8, selon lequel le premier réseau d'alimentation électrique (G12) est adapté pour fournir une tension inférieure au deuxième réseau d'alimentation électrique (G48).

10. Dispositif électronique (1) selon l'une quelconque des revendications précédentes 1 à 9, selon lequel le bus système série (BLIN) est un bus LIN.

11. Dispositif électronique (1) selon l'une quelconque des revendications précédentes 1 à 10, selon lequel l'interrupteur principal (Q2) comprend une tension de claquage supérieure à 48Volts.

12. Dispositif électronique (1) selon la revendication 2 et l'une quelconque des revendications précédentes 3 à 11, selon lequel ledit dispositif électronique (1) est adapté pour fonctionner en mode esclave et selon lequel le module de pilotage (DLIN) est adapté pour recevoir et émettre des signaux (DAT) sur le bus système série (BLIN) de et vers un module maître (2).

13. Dispositif électronique (1) selon l'une quelconque des revendications précédentes 1 à 12, selon lequel le module fonctionnel (11) comprend au moins un élément chauffant résistif (110) relié à la première interface de connexion (I12) et au moins un élément de pilotage associé (111) relié à la deuxième interface de connexion (I48), ledit élément de pilotage (111) étant adapté pour piloter un courant dans ledit élément chauffant résistif (110).

14. Dispositif de chauffage électrique pour véhicule automobile comprenant un dispositif électronique (1) selon l'une quelconque des revendications précédentes 1 à 13.

15. Pulseur d'air pour véhicule automobile comprenant un dispositif électronique (1) selon l'une quelconque des revendications précédentes 1 à 13.

## Patentansprüche

1. Elektronische Vorrichtung (1) für ein Kraftfahrzeug (V), die geeignet ist, von einem ersten Stromversorgungsnetz (G12) und von einem zweiten Stromversorgungsnetz (G48) mit Spannung versorgt zu werden, wobei die elektronische Vorrichtung (1) enthält:
- eine erste Verbindungsschnittstelle (I12) mit dem ersten Stromversorgungsnetz (G12);
- eine zweite Verbindungsschnittstelle (I48) mit dem zweiten Stromversorgungsnetz (G48), wobei die erste Verbindungsschnittstelle (I12) und die zweite Verbindungsschnittstelle (I48) mit einer gemeinsamen Masse (GND) verbunden sind;
- eine dritte Verbindungsschnittstelle (ILIN) mit einem seriellen Systembus (BLIN);
- einen Hauptschalter (Q2), der geeignet ist, Signale (DAT) auf dem seriellen Systembus (BLIN) zu weiterzuleiten;
- eine Haupt-Antirücklaufdiode (D8), die geeignet ist, einen Strom (i1) daran zu hindern, vom zweiten Stromversorgungsnetz (G48) zum ersten Stromversorgungsnetz (G12) zu fließen;
- ein Funktionsmodul (11), das mit der ersten Verbindungsschnittstelle (I12) und mit der zweiten Verbindungsschnittstelle (I48) verbunden ist;
- ein Schutzmodul (10), das geeignet ist, das erste Stromnetz (G12) und den seriellen Systembus (BLIN) vom zweiten Stromversorgungsnetz (G48) bei einem Verlust der gemeinsamen Masse (GND) zu isolieren.

2. Elektronische Vorrichtung (1) nach Anspruch 1, wobei das Funktionsmodul (11) außerdem ein Steuermodul (DLIN) enthält, das geeignet ist, vom ersten Stromversorgungsnetz (G12) mit Spannung versorgt zu werden und Signale (DAT) über den seriellen Systembus (BLIN) zu empfangen und/oder zu senden.

3. Elektronische Vorrichtung (1) nach Anspruch 1 oder nach Anspruch 2, wobei das Schutzmodul (10) einen Sekundärschalter (Q6) enthält, der geeignet ist, sich beim Verlust der gemeinsamen Masse (GND) zu öffnen, um den Hauptschalter (Q2) zu öffnen.

4. Elektronische Vorrichtung (1) nach einem der vorhergehenden Ansprüche 1 bis 3, wobei das Schutzmodul (10) außerdem einen Haupt-Rückstellwiderstand (R7) enthält, um die Öffnung des Hauptschalters (Q2) beim Verlust der gemeinsamen Masse (GND) zu garantieren.

5. Elektronische Vorrichtung (1) nach einem der vorhergehenden Ansprüche 1 bis 4, wobei das Schutzmodul (10) außerdem einen Sekundär-Rückstellwiderstand (R15) enthält, um die Öffnung des Sekundärschalters (Q6) beim Verlust der gemeinsamen Masse (GND) zu garantieren.

6. Elektronische Vorrichtung (1) nach einem der vorhergehenden Ansprüche 1 bis 5, wobei das Schutzmodul (10) außerdem eine Sekundär-Antirücklaufdiode (D11) enthält, die geeignet ist, einen Strom (i3) daran zu hindern, zum ersten Stromnetz (G12) zu fließen, wenn der Sekundärschalter (Q6) in einem offenen Zustand ist.

7. Elektronische Vorrichtung (1) nach einem der vorhergehenden Ansprüche 1 bis 6, wobei das Schutzmodul (10) außerdem einen Basiswiderstand (R14) enthält, um das Schließen des Sekundärschalters (Q6) zu garantieren, wenn Strom (i) im Sekundärschalter (Q6) fließt.

8. Elektronische Vorrichtung (1) nach Anspruch 2 und einem der vorhergehenden Ansprüche 3 bis 7, wobei der Hauptschalter (Q2) zwischen dem seriellen Systembus (BLIN) und dem Steuermodul (DLIN) angeordnet ist.

9. Elektronische Vorrichtung (1) nach einem der vorhergehenden Ansprüche 1 bis 8, wobei das erste Stromversorgungsnetz (G12) geeignet ist, eine niedrigere Spannung an das zweite Stromversorgungsnetz (G48) zu liefern.

10. Elektronische Vorrichtung (1) nach einem der vorhergehenden Ansprüche 1 bis 9, wobei der serielle Systembus (BLIN) ein LIN-Bus ist.

11. Elektronische Vorrichtung (1) nach einem der vorhergehenden Ansprüche 1 bis 10, wobei der Hauptschalter (Q2) eine Durchschlagspannung höher als 48 Volt enthält.

12. Elektronische Vorrichtung (1) nach Anspruch 2 und einem der vorhergehenden Ansprüche 3 bis 11, wobei die elektronische Vorrichtung (1) geeignet ist, im Slave-Modus zu arbeiten, und wobei das Steuermodul (DLIN) geeignet ist, Signale (DAT) auf dem seriellen Systembus (BLIN) von und zu einem Master-Modul (2) zu empfangen und zu senden.

13. Elektronische Vorrichtung (1) nach einem der vorhergehenden Ansprüche 1 bis 12, wobei das Funktionsmodul (11) mindestens ein Widerstandsheizelement (110), das mit der ersten Verbindungsschnittstelle (I12) verbunden ist, und mindestens ein zugeordnetes Steuerelement (111) enthält, das mit der zweiten Verbindungsschnittstelle (I48) verbunden ist, wobei das Steuerelement (111) geeignet ist, einen Strom im Widerstandsheizelement (110) zu steuern.

14. Elektrische Heizvorrichtung für ein Kraftfahrzeug, die eine elektronische Vorrichtung (1) nach einem der vorhergehenden Ansprüche 1 bis 13 enthält.

15. Luftgebläse für ein Kraftfahrzeug, das eine elektronische Vorrichtung (1) nach einem der vorhergehenden Ansprüche 1 bis 13 enthält.

## Claims

1. Electronic device (1) for a motor vehicle (V) designed to be supplied with a voltage by a first electrical supply network (G12) and by a second electrical supply network (G48), according to which the electronic device (1) comprises:
- a first connection interface (112) for connection with the first electrical supply network (G12);
- a second connection interface (148) for connection with the second electrical supply network (G48), the first connection interface (112) and the second connection interface (148) being connected to a common ground (GND);
- a third connection interface (ILIN) for connection with a serial bus system (BLIN);
- a main switch (Q2) designed to convey signals (DAT) over the serial bus system (BLIN);
- a main non-return diode (D8) designed to prevent a current (i1) from flowing from the second electrical supply network (G48) to the first electrical supply network (G12);
- a functional module (11) connected to the first connection interface (112) and to the second connection interface (148);
- a protection module (10) designed to isolate the first electrical network (G12) and the serial bus system (BLIN) from the second electrical supply network (G48) upon a loss of the common ground (GND).

2. Electronic device (1) according to Claim 1, according to which the functional module (11) further comprises an electronic driver (DLIN) designed to be supplied with a voltage by the first electrical supply network (G12) and to receive and/or send signals (DAT) via the serial bus system (BLIN).

3. Electronic device (1) according to Claim 1 or according to Claim 2, according to which the protection module (10) comprises a secondary switch (Q6) designed to open upon the loss of the common ground (GND) in order to open the main switch (Q2).

4. Electronic device (1) according to any one of the preceding Claims 1 to 3, according to which the protection module (10) further comprises a main pull-down resistor (R7) to guarantee the opening of the main switch (Q2) upon the loss of the common ground (GND).

5. Electronic device (1) according to any one of the preceding Claims 1 to 4, according to which the protection module (10) further comprises a secondary pull-down resistor (R15) to guarantee the opening of the secondary switch (Q6) upon the loss of the common ground (GND) .

6. Electronic device (1) according to any one of the preceding Claims 1 to 5, according to which the protection module (10) further comprises a secondary non-return diode (D11) designed to prevent a current (i3) from flowing to the first electrical network (G12) when the secondary switch (Q6) is in an open state.

7. Electronic device (1) according to any one of the preceding Claims 1 to 6, according to which the protection module (10) further comprises a base resistor (R14) to guarantee the closure of the secondary switch (Q6) when current (i) flows through said secondary switch (Q6) .

8. Electronic device (1) according to Claim 2 and any one of the preceding Claims 3 to 7, according to which the main switch (Q2) is disposed between the serial bus system (BLIN) and the electronic driver (DLIN).

9. Electronic device (1) according to any one of the preceding Claims 1 to 8, according to which the first electrical supply network (G12) is designed to provide a lower voltage than the second electrical supply network (G48) .

10. Electronic device (1) according to any one of the preceding Claims 1 to 9, according to which the serial bus system (BLIN) is a LIN bus.

11. Electronic device (1) according to any one of the preceding Claims 1 to 10, according to which the main switch (Q2) comprises a breakdown voltage greater than 48 volts.

12. Electronic device (1) according to Claim 2 and any one of the preceding Claims 3 to 11, according to which said electronic device (1) is designed to operate in slave mode and according to which the electronic driver (DLIN) is designed to receive and send signals (DAT) over the serial bus system (BLIN) from and to a master module (2) .

13. Electronic device (1) according to any one of the preceding Claims 1 to 12, according to which the functional module (11) comprises at least one resistive heating element (110) connected to the first connection interface (112) and at least one associated driver element (111) connected to the second connection interface (148), said driver element (111) being designed to drive a current through said resistive heating element (110) .

14. Electrical heating device for a motor vehicle comprising an electronic device (1) according to any one of the preceding Claims 1 to 13.

15. Air blower for a motor vehicle comprising an electronic device (1) according to any one of the preceding Claims 1 to 13.
